# EUROPEAN PATENT APPLICATION

(11) **EP 0 917 399 A2**
(43) Date of publication of application: **19.05.1999**
(21) Application number: 98308608.3
(22) Date of filing: 21.10.1998
(51) Int. Cl.: H04S 1/00, G11B 27/02

(54) **Method for creating audio data with special effects**

(30) Priority: 17.11.1997 US 65887 P; 16.07.1998 US 116638
(71) Applicant: Mitsumi Electric Company Ltd., Chofu-shi Tokyo (JP)
(72) Inventor: Kurihara, Tetsuo, Tokyo (JP)
(74) Representative: Vinsome, Rex Martin

(57) **Abstract**

A recording method creates audio data that has special effects such as Q-sound effects incorporated into the audio data before the audio data is written to a CD (15) by a CD writer (14) . A playback device (16, 17, 18) reproduces the special effects during playback without requiring a special effects processor.

## Description

### BACKGROUND OF THE INVENTION

The present invention relates to a method for creating audio data with special effects.

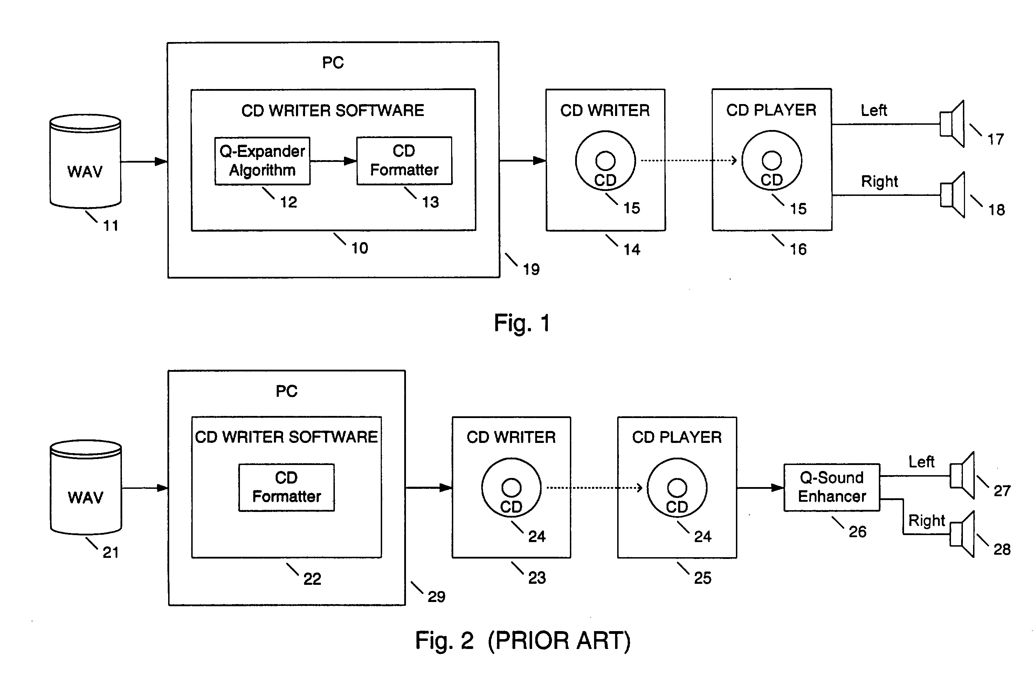

Among its many capabilities, personal computers are able to record and playback audio data. The recording and playback operations are generally performed using CDs (compact disks). CD writer software can be used for this. A conventional CD writer system using CD writer software is shown in Fig. 2.

In a conventional CD writer system, CD writer software reads data from a sound source, such as a hard drive, into a personal computer 29 (PC) for processing. The data, e.g. music data, can be in a WAV file 21 on a HDD (hard disk drive). The data is read into PC 29 and converted to a CD format using CD writer software 22. The converted data is written to a CD 24 by a CD writer 23. The music data written to CD 24 is identical to the music that would be played back from WAV file 21, which is the original source of the data.

Recently, a virtual audio system technology called the Q-sound virtual audio system has been developed. The Q-sound system is fully defined in the following references whose disclosures are herein incorporated by reference: U.S. 4,308,424, U.S. 5,046,097, U.S. 5,052,685, U.S. 5,105,462, U.S. 5,138,660, U.S. 5,208,860, and U.S. 5,440,638.

In a Q-sound system, a stereo audio system having at least two speakers provides an acoustic effect known as the Q-sound effect. Sound processed by the Q-sound effect is selectively delayed so that the apparent source of the sound perceived by the listener appears to be coming from a position that is different from the actual speaker positions. Special hardware is used to produce the Q-sound effect.

In a conventional CD player system, a CD player 25 reproduces the sound previously recorded on CD 24. The output of CD player 25 is applied to a Q-sound enhancer 26. The Q-sound enhancer 26 processes the data from CD player 25 to provide the desired delay effect to left speaker 27 and right speaker 28. The produced Q-sound effect is perceived by the listener to originate from a position that is different from the actual location of the speakers.

In order to obtain this kind of Q-sound effect in stereo devices it has been necessary to connect Q-sound enhancer 26 to the output of the CD player 25 which applies a Q-sound effect algorithm. The Q-sound enhancer 26 provides an interface between the CD player 25 and speakers 27 and 28 such that the Q-sound effect can be heard through speakers 27 and 28 by the listener.

### OBJECTS AND SUMMARY OF THE INVENTION

An object of the present invention is to provide a method for reproducing sound that utilizes special effects such as Q-sound effects without the need for an external Q-sound enhancer.

It is another object of the present invention to provide a method of recording audio data that has Q-sound special effects applied to the data, such that Q-sound effects can be heard by the listener upon playback through a conventional CD player without the need for special Q-sound hardware.

Another object of the present invention is to provide a method for generating audio data by taking audio data from an audio source, processing the audio data to generate special effects, such as the Q-sound effect, and generating special effect data where such special effect data is written to a recording means such as a CD writer.

Briefly stated, a recording method creates audio data that has special effects such as Q-sound effects incorporated into the audio data before the audio data is written to a CD by a CD writer. A playback device reproduces the special effects during playback without requiring a special effects processor.

According to an aspect of the invention, there is provided a method for creating audio data, the method comprising the steps of: reading source data from a sound source; applying at least one special effect to the source data to produce special effect data; processing the special effect data to produce formatted special effect data suitable for recording on a recording medium; and recording the formatted special effect data on the recording medium.

According to another aspect of the invention, there is provided a method for reproducing audio data, the method comprising the steps of: reading source data from a sound source; applying a Q-sound special effect to the source data to produce special effect data; processing the special effect data to produce formatted special effect data suitable for recording on a compact disk; recording the formatted special effect data on the compact disk; playing the compact disk to produce a left channel signal and a right channel signal; and feeding the left channel signal and the right channel signal to a pair of speakers, to produce the Q-sound special effect from the speakers.

According to a further aspect of the invention, there is provided a device for recording audio data from a sound source, comprising: means for processing the audio data from the sound source; the means for processing applying at least one special effect to the audio data; the means for processing including a data formatter; the at least one special effect processes said audio data to produce audio data containing the special effect; the data formatter includes means for processing the audio data containing the special effect to produce formatted data; and means for recording the formatted data onto a recording medium.

According to a further aspect of the invention, there is provided a system for reproducing digitally recorded sound, from a sound source, on a digital playback device having stereo output, comprising: a processing means having a special effect; the processing means having a data formatter; the special effect processes input data from the sound source to produce special effect sound data; the data formatter processes the special effect sound data to produce formatted special effect data; and a digital sound recorder for recording the formatted special effect data on a digital medium such that the special effect sound data can be audibly heard through the digital playback device from the stereo output.

In accordance with a further aspect of the invention, there is provided a system for reproducing digitally recorded sound on a right speaker and left speaker, comprising: a sound source; a processing means having a Q-sound special effect; said processing means having a compact disk data formatter; the Q-sound special effect processes input data from the sound source to produce special effect sound data; the data formatter processes the special effect sound data to produce formatted special effect data; a digital sound recorder for recording the formatted special effect data on a digital medium; a digital sound player for reproducing sound recorded on the digital medium; the digital sound player effective to produce a left channel signal and a right channel signal; the left channel signal coupled to the left channel speaker; and the right channel signal coupled to the right channel speaker; wherein the left channel and the right channel speakers produce a Q-sound special effect.

The above, and other objects, features and advantages of the present invention will become apparent from the following description read in conjunction with the accompanying drawings, in which like reference numerals designate the same elements.

### BRIEF DESCRIPTION OF THE DRAWINGS

Fig. 1 is a drawing showing a method of creating and writing audio data with sound effects according to the present invention as implemented in a personal computer.

Fig. 2 is a drawing to which reference will be made describing a conventional method for creating audio data using a personal computer, and subsequently processing the data coming out ofa CD player to produce a Q-sound special effect as heard by the listener.

### DETAILED DESCRIPTION OF THE PREFERRED EMBODIMENTS

Referring to Fig. 1, WAV file 11 serves as a digital audio data source, feeding digital audio data to a personal computer (PC) 19 having CD writer software 10. CD writer 14, either internal or external to PC 19, records the data on a CD 15. CD writer software 10 includes a Q-expander algorithm 12 and a CD formatter 13. The CD writer software 10 processes the digital audio data from the data source (WAV file 11), and feeds the processed digital audio data to CD writer 14.

In PC 19, having CD writer software 10, the Q-expander algorithm 12 applies a Q-sound effect to data, e.g., music data, read from WAV file 11 on a HDD. Next, this data is converted to a CD format using CD formatter 13, and is then recorded to CD 15 by CD writer 14.

Thus, by using CD writer software 10 having Q-expander algorithm 12, a Q-sound effect can be applied to the data prior to recording on CD 15. The Q-sound effect is present on the formatted data on CD 15. As a result, reproduced sound including the Q-sound effect, is easily provided using a conventional CD player 16. CD player 16 sends audio data from CD 15 to a left speaker 17 and a right speaker 18. The data recorded on CD 15 already has the Q-sound effect present in the data, and the listener (not shown) can hear the Q-sound effect from the speakers. The need for special hardware connected to CD player 16, as in the prior art, is eliminated.

In the above description, the present invention is implemented in a personal computer. However, the present invention is not limited to implementation in personal computers. For example, instead of using WAV file 11 as the digital audio data source, it would be possible to use, for example, digital data from a CD player, a DVD player, a digital audio source, data from a tape player or from an A/D converter. The format of the data can be monaural, stereo, or AC3 used in DVD formats.

In addition to the Q-expander algorithm it is also possible to use other special effect processing algorithms. Furthermore, the recording medium is not restricted to CDs and can comprise other recording media, such as magnetic tape. Formatting means is provided to convert data into a format appropriate to the type of recording medium being used. In particular, if magnetic tape is to be used in Fig. 1, a D/A converter would be needed after CD formatter 13.

As described above, software having a special effects processing algorithm, such as a Q-expander algorithm, is used to apply a special effect to the data before the data is recorded directly to a recording medium (e.g., a CD). Thus, any special effect, including the Q-sound effect, can be easily provided via a player, such as a conventional CD player, without needing any special hardware.

Having described preferred embodiments of the invention with reference to the accompanying drawings, it is to be understood that the invention is not limited to those precise embodiments, and that various changes and modifications may be effected therein by one skilled in the art without departing from the scope or spirit of the invention as defined in the appended claims.

## Claims

1. A method for creating audio data, the method comprising the steps of:
reading source data from a sound source;
applying at least one special effect to said source data to produce special effect data;
processing said special effect data to produce formatted special effect data suitable for recording on a recording medium; and
recording said formatted special effect data on said recording medium.

2. A method according to claim 1, wherein said step of reading comprises:
reading said source data from a hard disk drive.

3. A method according to claim 2, wherein said step of reading source data comprises:
reading said source data from said hard disk drive in a WAV format.

4. A method according to any one of the preceding claims, wherein said step of applying at least one special effect comprises:
applying a Q-sound effect.

5. A method according to any one of the preceding claims, wherein said step of applying at least one special effect comprises:
applying a selective delay which produces an apparent sound source position that is different from an original sound source position.

6. A method according to claim 5, wherein:
said step of reading source data comprises reading source data from a stereo sound source having left channel data and right channel data; and
said step of applying a selective delay further comprises applying said selective delay to at least one of said left channel data and said right channel data.

7. A method according to any one of the preceding claims, wherein said step of recording said formatted special effect data on said recording medium comprises:
recording said formatted special effect data on a compact disk.

8. A method for reproducing audio data, the method comprising the steps of:
reading source data from a sound source;
applying a Q-sound special effect to said source data to produce special effect data;
processing said special effect data to produce formatted special effect data suitable for recording on a compact disk;
recording said formatted special effect data on said compact disk;
playing said compact disk to produce a left channel signal and a right channel signal; and
feeding said left channel signal and said right channel signal to a pair of speakers, to produce said Q-sound special effect from said speakers.

9. A device for recording audio data from a sound source, comprising;
means for processing said audio data from said sound source;
said means for processing applying at least one special effect to said audio data;
said means for processing including a data formatter;
said at least one special effect processes said audio data to produce audio data containing said special effect;
said data formatter includes means for processing said audio data containing said special effect to produce formatted data; and
means for recording said formatted data onto a recording medium.

10. A system for reproducing digitally recorded sound, from a sound source, on a digital playback device having stereo output, comprising:
a processing means having a special effect;
said processing means having a data formatter;
said special effect processes input data from said sound source to produce special effect sound data;
said data formatter processes said special effect sound data to produce formatted special effect data; and
a digital sound recorder for recording said formatted special effect data on a digital medium such that said special effect sound data can be audibly heard through said digital playback device from said stereo output.

11. A system for reproducing digitally recorded sound, from a sound source, on a digital playback device, as in claim 11, wherein:
said digital sound recorder is a digital disk writer;
said digital playback device is a digital disk player; and
said digital medium is a digital disk.

12. A system for reproducing digitally recorded sound on a right speaker and left speaker, comprising:
a sound source;
a processing means having a Q-sound special effect;
said processing means having a compact disk data formatter;
said Q-sound special effect processes input data from said sound source to produce special effect sound data;
said data formatter processes said special effect sound data to produce formatted special effect data;
a digital sound recorder for recording said formatted special effect data on a digital medium;
a digital sound player for reproducing sound recorded on said digital medium;
said digital sound player effective to produce a left channel signal and a right channel signal;
said left channel signal coupled to said left channel speaker; and
said right channel signal coupled to said right channel speaker;
wherein said left channel and said right channel speakers produce a Q-sound special effect.
